# EUROPÄISCHE PATENTANMELDUNG

(11) **EP 1 098 192 A2**
(43) Veröffentlichungstag der Anmeldung: **09.05.2001**
(21) Anmeldenummer: 00122033.4
(22) Anmeldetag: 11.10.2000
(51) Int. Cl.: G01N 27/30

(54) **Indikatorelektrode mit einer sensitiven Oberfläche und Verwendung hierfür**

(30) Priorität: 05.11.1999 DE 19953218
(71) Anmelder: M.K. Juchheim GmbH & Co., 36039 Fulda (DE)
(72) Erfinder: John, Peter Dr., 36041 Fulda (DE)
(74) Vertreter: Zapfe, Hans, Dipl.-Ing.

(57) **Zusammenfassung**

Bei einer Indikatorelektrode mit einer sensitiven Oberfläche (9) aus mindestens einem Metall aus der IV. bis VI. Nebengruppe des Periodischen Systems, die zur potentiometrischen Messung der Konzentration von Oxidationsmitteln in wässrigen Lösungen, insbesondere zur Messung der Wasserstoffperoxidkonzentration in einem sauren wässrigen Meßmedium dient, besteht die sensitive Oberfläche (9) zu mindestens 40 Gewichtsprozent, vorzugsweise zu mindestens 50 Gewichtsprozent, aus Vanadium und ist unpassiviert für den ersten Meßeinsatz verwendbar. Dadurch werden die Herstellkosten verringert, die Lebensdauer verlängert und der Meßbereich in Richtung auf höhere Konzentrationen des Meßmediums vergrößert. Vorteilhaft wird dabei die sensitive Oberfläche (9) durch einen auswechselbaren Meßkörper (8) gebildet. Beansprucht wird auch die Verwendung einer solchen Indikatorelektrode zur potentiometrischen Messung der Konzentration von Oxidationsmitteln in wässrigen Lösungen, insbesondere zur Messung der Wasserstoffperoxidkonzentration in einem sauren wässrigen Meßmedium.

## Beschreibung

Die Erfindung betrifft eine Indikatorelektrode mit einer sensitiven Oberfläche aus mindestens einem Metall aus der IV. bis VI. Nebengruppe des Periodischen Systems zur potentiometrischen Messung der Konzentration von Oxidationsmitteln in wässrigen Lösungen, insbesondere zur Messung der Wasserstoffperoxidkonzentration in einem sauren wässrigen Meßmedium.

Potentiometrische Messungen sind in der analytischen "on-line" Betriebsmeßtechnik vorteilhaft, da sie sich mit verhältnismäßig einfachen Mitteln realisieren lassen. Von den Indikatorelektroden werden dabei schnelles Ansprechen, Reproduzierbarkeit, Langzeitstabilität und - aus ökonomischen Gründen - eine möglichst lange Lebensdauer gefordert. Beispiele sind pH-Messungen, bei denen die Indikatorelektrode eine Glaselektrode ist, und Redox-Messungen, bei denen hauptsächlich Edelmetallelektroden, z.B. aus Platin oder Gold, zum Einsatz kommen.

Die zur Zeit üblichen Redox-Messungen werden vorwiegend bei der Entgiftung von Abwässern in der Galvanotechnik (Dosierung von Oxidations- und Reduktionsmitteln) und in der Schwimmbad-Wasserüberwachung eingesetzt.

Den Edelmetallelektroden sagt man nach, daß sie die Redox-Gleichgewichte nicht beeinflussen. Die sich einstellenden Potentiale lassen sich jedoch nicht zur Konzentrationsmessung heranziehen, da sie vom Quotienten aus den Konzentrationen bzw. Aktivitäten der oxidierenden und der reduzierenden Komponenten des Potential gebenden Redoxpaares abhängen.

Durch die DE 196 11 113 C1 und die ihr entsprechende EP 0 797 093 A2 ist es bekannt, Redoxelektroden mit sensitiven Oberflächen aus mindestens einem Metall aus der IV. bis VI. Nebengruppe des Periodischen Systems zur Messung der Konzentrationen von Wasserstoffperoxid, Peroxoverbindungen, Halogenen, Nitrosylverbindungen und freien Radikalen des Sauerstoffs zu verwenden, wobei jedoch ein extrem hoher Reinheitsgrad der Metalle, insbesondere ein maximaler Gehalt von nur 5 ppm an Metallen der VIII. Nebengruppe des Periodischen Systems Voraussetzung ist. Weitere Voraussetzung ist bei der Herstellung dieser Elektroden eine aufwendige Passivierung der späteren sensitiven Oberfläche durch anodische Oxidation, die vorzugsweise mehrfach durchgeführt wird, wobei vor jeder anodischen Oxidation die zuvor erzeugte Passivschicht wieder entfernt wird. Die Herstellung ist daher extrem kostenträchtig, und obwohl diese Elektroden die Anforderungen weitgehend erfüllen, ist ihre Lebensdauer wegen der begrenzten Dicke der Passivschicht begrenzt, so daß die Elektroden häufiger erneuert werden müssen.

Der Autor ging dabei von der Überlegung aus, Redoxelektroden zu entwickeln, die eine hohe Selektivität und Empfindlichkeit im Spurenbereich gegenüber den zu bestimmenden Oxidationsmitteln aufweisen, wobei derartige Elektroden als wesentliche Eigenschaft den Charakter von korrosionsresistenten, an sich bekannten Edelmetallelektroden erhalten sollten, die praktisch unangreifbar für das Meßmedium sind.

Der Autor ging dabei von der weiteren Überlegung aus, daß die n-leitende Passivschicht wie eine Schottky-Sperrschicht wirkt und im Zusammenwirken mit spezifischen Adsorptionsvorgängen an der Oberfläche der Schicht dafür sorgt, daß die Elektroden eine gewisse Teilselektivität erhalten, eine Eigenschaft, die ihnen bei einigen Anwendungsfällen sogar Vorteile gegenüber den Edelmetallelektroden verschaffen sollten.

Es hat sich jedoch in der Praxis gezeigt, daß diese bekannten Elektroden nur in einem Konzentrationsbereich von 0,01 bis etwa 5 Gramm Wasserstoffperoxid pro Liter Wasser in schwefelsaurem Medium zu gut reproduzierbaren Ergebnissen führte. Bei einer darüber hinaus gehenden Konzentration hat sich überraschenderweise herausgestellt, daß die angeblich schützende passive Oxidschicht schon nach kurzer Zeit massive Korrosionsspuren aufwies, wodurch die Elektrode unbrauchbar wurde.

Der Erfindung liegt daher die Aufgabe zugrunde eine Indikatorelektrode der eingangs genannten Art anzugeben, die kostengünstig herstellbar ist, eine längere Lebensdauer aufweist, und die auch in höheren Konzentrationsbereichen aggressiver Meßmedien einsetzbar ist.

Die Lösung der gestellten Aufgabe erfolgt bei der eingangs angegebenen Indikatorelektrode erfindungsgemäß dadurch, daß die sensitive Oberfläche zu mindestens 40 Gewichtsprozent aus Vanadium besteht und unpassiviert für den ersten Meßeinsatz verwendbar ist.

Durch die Erfindung wird nicht nur die gestellte Aufgabe in vollem Umfange gelöst, sondern es bleiben auch die üblichen Kriterien wie schnelles Ansprechen, Reproduzierbarkeit und Langzeitstabilität erhalten. Ein interessanter Anwendungsfall möge dies erläutern: Bei der Herstellung von elektronischen Leiterplatten werden Ätzvorgänge in stark schwefelsaurem Medium mit einer Konzentration von 8,5 % und darüber und bei Wasserstoffperoxid-Konzentrationen von 20 Gramm pro Liter und darüber durchgeführt. Hierfür hat sich die erfindungsgemäße Indikatorelektrode trotz des Fehlens einer vorherigen Passivierung überraschend als einwandfrei geeignet erwiesen.

Die im Gegensatz zum Stande der Technik überraschende Feststellung, daß man auf die aufwändige Erzeugung der Passivschicht verzichten kann, führt zu einer wesentlich einfacheren Technologie bei der Herstellung dieser Elektroden, was als erheblicher fertigungstechnischer und daher ökonomischer Vorteil zu betrachten ist.

Es wurde zwar an Meßkörpern aus 99,8 % Vanadium mit scheibenförmigen und zylindrischen Oberflächen und an Meßkörpern, bei den sich an eine zylindrische Oberfläche eine Kugelfläche mit gleichem Radius anschloß, beobachtet, daß diese Oberflächen bei Wasserstoffperoxid--Konzentrationen bis zu 30 Gramm pro Liter örtlich mehr oder weniger stark abgetragen werden, wobei bei einem scheibenförmigen Meßkörper unter dem Elektronenmikroskop wachsende Ätzstrukturen bis zu 4 mm Tiefe festgestellt wurden, jedoch ging hierbei die Meßfähigkeit, gemessen an den obigen Kriterien keineswegs verloren. Bei einem Meßkörper mit einer zylindrischen sensitiven Oberfläche wurden ähnliche Erscheinungen selbst bei Ätzbad-Temperaturen von 40°C sogar erst nach etwa 6 Wochen festgestellt, wobei sich der Durchmesser des Meßkörpers von anfänglich 12 mm auf 9 mm verringerte. Auch hierbei blieb die Meßfähigkeit voll erhalten.

Als einfache Gegenmaßnahme hat sich eine ausreichende Dicke des Meßkörpers unter der sensitiven Oberflächen und/oder das Zulegieren eines anderen geeigneten Metalls, vorzugsweise eines Metalls aus der IV. bis VI. Nebengruppe des Periodischen Systems, insbesondere vorzugsweise von Titan, erwiesen, worauf weiter unten noch eingegangen wird.

Es kann angenommen werden, daß bei diesen Vorgängen mikrospopisch kleine Lokalelemente und damit Mischpotentiale anodischer und katodischer Vorgänge an der Oberfläche gebildet werden, die sich unter konstanten Meßbedingungen in der Summe nicht verändern und dadurch die reproduzierbare Langzeitstabilität der Elektrode begründen.

Es ist dabei im Zuge weiterer Ausgestaltungen der Erfindung besonders vorteilhaft, wenn - entweder einzeln, oder in Kombination - :
* die sensitive Oberfläche zu mindestens 50 Gew.-% aus Vanadium besteht,
* die sensitive Oberfläche zu mindestens 99,8 Gew.-% aus Vanadium besteht,
* die sensitive Oberfläche mindestens ein weiteres Metall, vorzugsweise aus der IV. bis VI. Nebengruppe des Periodischen Systems, enthält,
* der Rest des Oberflächenmaterials aus Titan besteht,
* das Oberflächenmaterial 10 bis 50 Gew.-% Titan enthält,
* der Rest des Oberflächenmaterials aus Niob besteht,
* der Rest des Oberflächenmaterials aus Titan und Niob besteht,
* die sensitive Oberfläche durch einen Meßkörper gebildet ist, der auswechselbar mit einem Elektrodenschaft aus Isolierstoff und mit mindestens einem Anschlußelement für die Ableitung der Meßspannung, verbunden ist, und wennn der Meßkörper als Hohlkörper ausgebildet und abgedichtet auf einem Gewindezapfen des Elektrodenschaftes angeordnet ist,
* der Meßkörper den Gewindezapfen umschließt und auf der dem Elektrodenschaft abgekehrten Seite abgedichtet durch eine Schraubkappe auf dem Gewindezapfen gehalten ist, und/oder wenn
* der Meßkörper als einseitig geschlossener Hohlzylinder ausgebildet und auf den Gewindezapfen aufgeschraubt ist, insbesondere, wenn der Meßkörper auf seiner geschlossenen Seite halbkugel- oder kegelförmig abgerundet ausgebildet ist.

Die Erfindung bezieht auch insbesondere auf die Verwendung einer solchen Indikatorelektrode mit einer sensitiven Oberfläche, die zu mindestens 40 Gewichtsprozent aus Vanadium besteht und unpassiviert ist, zur potentiometrischen Messung der Konzentration von Oxidationsmitteln in wässrigen Lösungen, insbesondere zur Messung der Wasserstoffperoxidkonzentration in einem sauren wässrigen Meßmedium.

Zwei Ausführungsbeispiele des Erfindungsgegenstandes werden nachfolgend anhand der Figuren 1 bis 4 näher erläutert.

Es zeigen:
- Figur 1: eine teilweise Explosionsdarstellung eines ersten Ausführungsbeispiels der Erfindung,
- Figur 2: den Gegenstand von Figur 1 in montiertem Zustand,
- Figur 3: ein zweites Ausführungsbeispiel der Erfindung in montiertem Zustand und
- Figur 4: ein Diagramm mit zwei Meßkurven für eine sensitive Oberfläche a) aus 99,8 Gew.-% reinem Vanadium und b) für eine Legierung aus 60 Gew.-% Vanadium und 40 Gew.-% Titan.

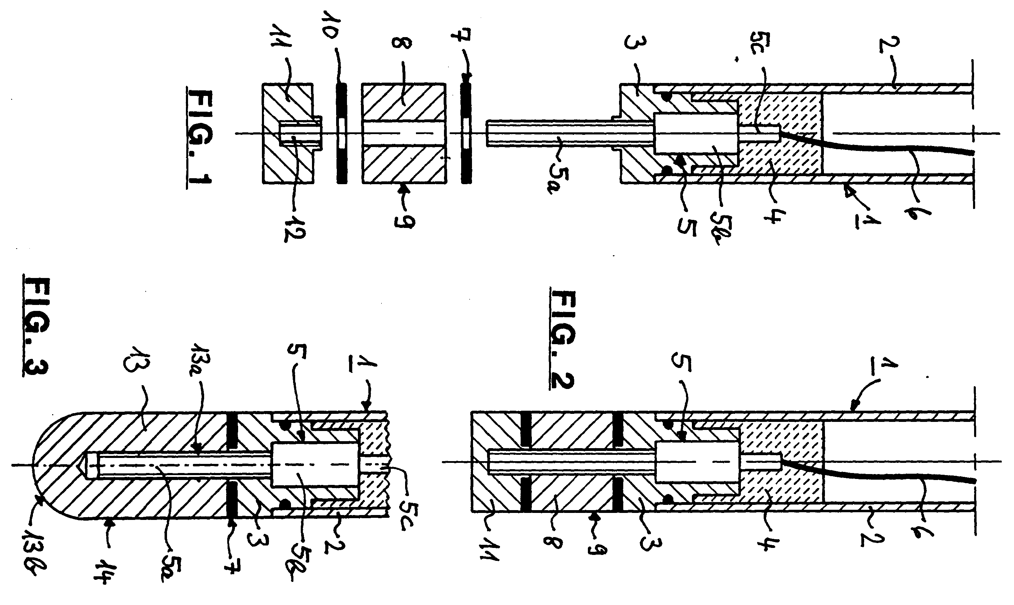

In den Figuren 1 bis 3 ist ein Elektrodenschaft 1 dargestellt, der - in koaxialer Anordnung - aus einem Isolierstoffrohr 2 und einem Verschlußstopfen 3 aus einem isolierenden Kunststoff besteht, der mittels einer polymeren Vergußmasse 4 im Isolierstoffrohr 2 abgedichtet festgelegt ist. Der Verschlußstopfen 3 hält einen Metallkörper 5, der einstückig aus einem Gewindezapfen 5a, einer Verdickung 5b und einer Anschlußhülse 5c für die elektrische Verbindung mit einer Ableitung 6 für die Meßspannung besteht. Die äußere Anschlußstelle für ein Meßkabel ist der Einfachheit halber nicht dargestellt, weil bekannt.

Der untere Teil von Figur 1 zeigt - von oben nach unten - einen ersten Dichtungsring 7, den eigentlichen Meßkörper 8 mit seiner sensitiven Oberflache 9, einen zweiten Dichtungsring 10 und eine Schraubkappe 11 mit einem Sackgewinde 12, die aus einem Isolierstoff besteht. Wichtig ist, daß durch die Dichtringe 7 und 10 ein Eindringen des Meßmediums verhindert wird.

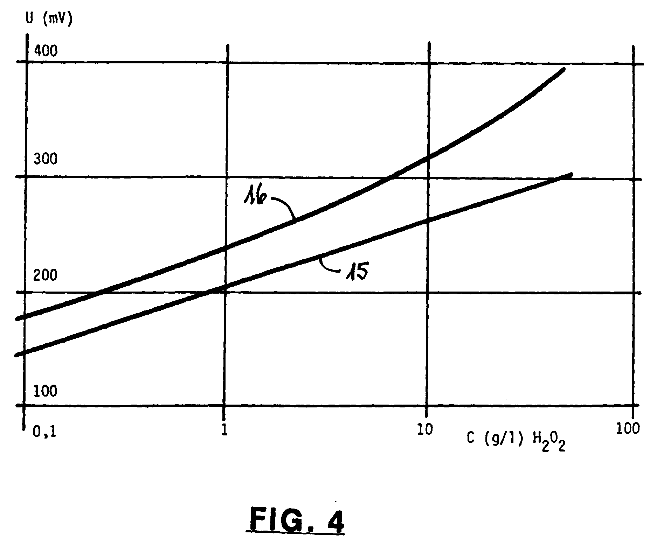

Figur 2 zeigt die Teile von Figur 1 in montiertem Zustand.

In Figur 3 stimmt der Elektrodenschaft 1 mit dem der Figuren 1 und 2 überein. Hier ist jedoch ein Meßkörper 13 mit einer sensitiven Oberfläche 14 dargestellt, der als einseitig geschlossener Hohlzylinder mit einem Sackgewinde 13a ausgebildet und unter Zwischenschaltung des Dichtungsringes 7 auf den Gewindezapfen 5a aufgeschraubt ist. Auf seiner geschlossenen Seite ist der Meßkörper bei Position 13b halbkugelförmig ausgebildet. Die Teile der Figuren 1/2 und 3 sind gegeneinander austauschbar.

In dem Diagramm nach Figur 4 sind auf der Abszisse die Konzentration "C" von Wasserstoffperoxid in Gramm "g" pro Liter "l" Wasser und auf der Ordinate die Meßspannung "U" in Millivolt aufgetragen, und zwar gilt die Meßkurve 15 für eine sensitive Oberfläche aus 99,8 Gew.-% reinem Vanadium (nach Beispiel 1) und die Meßkurve 16 für eine Legierung aus 60 Gew.-% Vanadium und 40 Gew.-% Titan (nach Beispiel 2). Die Messungen wurden in einer Meßkette gegen eine Bezugselektrode des Systems Ag/AgCl (3m KCL) bei 20°C in Gegenwart von 8,5 % Schwefelsäure durchgeführt.

Die Indikatorelektrode kann zu einer Meßkette mit einer Referenzelektrode ausgebaut werden, so z.B. zu einer Einstabmeßkette, bei der die Indikatorelektrode mit ihrer Bezugselektrode integriert ist.

### Beispiel 1:

Bei einer Indikatorelektrode nach Figur 3 bestand der Meßkörper 13 aus Vanadium mit einer Reinheit von 99,8 %, mit einem Durchmesser von 10 mm und einer Länge von 15 mm. Die Oberfläche war mechanisch poliert. Diese Indikatorelektrode wurde zusammen mit einer Silber/Silberchlorid-Bezugselektrode mit 3-molarer Kaliumchloridlösung als Bezugselektrolyt an einen Redox-Meßumformer mit hochohmigem Eingang angeschlossen. Beide Elektroden befanden sich in einem Gefäß und tauchten in 8,5 %-ige Schwefelsäure ein, die eine Temperatur von 20°C hatte. Durch Zugabe von Wasserstoffperoxid wurden nacheinander verschiedene Konzentrationen eingestellt, und die Spannung der Meßkette wurde registriert. Figur 4 zeigt den Spannungsverlauf anhand der Meßkurve 15. Die Meßkette sprach sehr schnell und reproduzierbar auf die Konzentrationsänderungen an. Diese Meßeigenschaften waren auch nach 14 Tagen Betrieb und bei Temperaturen von zeitweise 40°C vorhanden, obwohl der Meßkörper, vorwiegend an seinem halbkugelförmigen Ende, deutliche Korrosionsspuren aufwies.

### Beispiel 2:

Der Versuch nach Beispiel 1 wurde wiederholt, jedoch mit dem Unterschied, daß der Meßkörper 13 in diesem Fall aus 60 Gew.-% Vanadium und 40 Gew.-% Titan bestand. Die Meßkurve 16 ist in Figur 4 dargestellt, und das Korrosionsverhalten war deutlich besser. Ansonsten aber ergaben sich analoge Verhältnisse.

### Bezugszeichenliste:

- 1: Elektrodenschaft
- 2: Isolierstoffrohr
- 3: Verschlußstopfen
- 4: Vergußmasse
- 5: Metallkörper
- 5a: Gewindezapfen
- 5b: Verdickung
- 5c: Anschlußhülse
- 6: Ableitung
- 7: Dichtungsring
- 8: Meßkörper
- 9: sensitive Oberfläche
- 10: Dichtungsring
- 11: Schraubkappe
- 12: Sackgewinde
- 13: Meßkörper
- 13a: Sackgewinde
- 13b: Position
- 14: sensitive Oberfläche
- 15: Meßkurve
- 16: Meßkurve

## Patentansprüche

1. Indikatorelektrode mit einer sensitiven Oberfläche (9, 14) aus mindestens einem Metall aus der IV. bis VI. Nebengruppe des Periodischen Systems zur potentiometrischen Messung der Konzentration von Oxidationsmitteln in wässrigen Lösungen, insbesondere zur Messung der Wasserstoffperoxidkonzentration in einem sauren wässrigen Meßmedium, **dadurch gekennzeichnet,** daß die sensitive Oberfläche (9, 14) zu mindestens 40 Gewichtsprozent aus Vanadium besteht und unpassiviert für den ersten Meßeinsatz verwendbar ist.

2. Indikatorelektrode nach Anspruch 1, **dadurch gekennzeichnet,** daß die sensitive Oberfläche (9, 14) zu mindestens 50 Gewichtsprozent aus Vanadium besteht.

3. Indikatorelektrode nach Anspruch 1, **dadurch gekennzeichnet,** daß die sensitive Oberfläche (9, 14) zu mindestens 99,8 Gew.-% aus Vanadium besteht.

4. Indikatorelektrode nach Anspruch 1, **dadurch gekennzeichnet,** daß die sensitive Oberfläche (9, 14) mindestens ein weiteres Metall aus der IV. bis VI. Nebengruppe des Periodischen Systems enthält.

5. Indikatorelektrode nach Anspruch 3, **dadurch gekennzeichnet,** daß der Rest des Oberflächenmaterials aus Titan besteht.

6. Indikatorelektrode nach Anspruch 4, **dadurch gekennzeichnet,** daß das Oberflächenmaterial 10 bis 50 Gew.-% Titan enthält.

7. Indikatorelektrode nach Anspruch 3, **dadurch gekennzeichnet,** daß der Rest des Oberflächenmaterials aus Niob besteht.

8. Indikatorelektrode nach Anspruch 3, **dadurch gekennzeichnet,** daß der Rest des Oberflächenmaterials aus Titan und Niob besteht.

9. Indikatorelektrode nach Anspruch 1, wobei die sensitive Oberfläche (9,14) durch einen Meßkörper (8, 13) gebildet ist und wobei der Meßkörper (3, 13) auswechselbar mit einem Elektrodenschaft (1) aus Isolierstoff und mit mindestens einem Anschlußelement für die Ableitung der Meßspannung, verbunden ist, **dadurch gekennzeichnet,** daß der Meßkörper (8, 13) als Hohlkörper ausgebildet und abgedichtet auf einem Gewindezapfen (5a) des Elektrodenschaftes (1) angeordnet ist.

10. Indikatorelektrode nach Anspruch 9, **dadurch gekennzeichnet,** daß der Meßkörper (8) den Gewindezapfen (5a) umschließt und auf der dem Elektrodenschaft (1) abgekehrten Seite abgedichtet durch eine Schraubkappe (11) auf dem Gewindezapfen (5a) gehalten ist.

11. Indikatorelektrode nach Anspruch 9, **dadurch gekennzeichnet,** daß der Meßkörper (13) als einseitig geschlossener Hohlzylinder ausgebildet und auf den Gewindezapfen (5a) aufgeschraubt ist.

12. Indikatorelektrode nach Anspruch 11, **dadurch gekennzeichnet**, daß der Meßkörper (13) auf seiner geschlossenen Seite halbkugelförmig abgerundet ausgebildet ist.

13. Verwendung einer Indikatorelektrode mit einer sensitiven Oberfläche (9, 14), die zu mindestens 40 Gewichtsprozent aus Vanadium besteht und unpassiviert ist, zur potentiometrischen Messung der Konzentration von Oxidationsmitteln in wässrigen Lösungen.

14. Verwendung einer Indikatorelektrode mit einer sensitiven Oberfläche (9, 14), die zu mindestens 40 Gewichtsprozent aus Vanadium besteht und unpassiviert ist, zur potentiometrischen Messung der Wasserstoffperoxidkonzentration in einem sauren wässrigen Meßmedium.
